# FASCICULE DE BREVET EUROPEEN

(11) **EP 3 238 150 B1**
(45) Date de publication et mention de la délivrance du brevet: **22.08.2018**
(21) Numéro de dépôt: 15828827.4
(22) Date de dépôt: 17.12.2015
(51) Int. Cl.: G06Q 20/12, G06Q 20/32, G06Q 20/38, H04W 12/12, H04W 12/02, H04L 29/06

(54) **PROCÉDÉ DE SÉCURISATION DE TRANSACTIONS SANS CONTACT**
VERFAHREN ZUR ABSICHERUNG KONTAKTLOSER TRANSAKTIONEN
METHOD FOR MAKING CONTACTLESS TRANSACTIONS SECURE

(30) Priorité: 23.12.2014 FR 1463263
(43) Date de publication de la demande: 01.11.2017
(73) Titulaire: Orange, 75015 Paris (FR)
(72) Inventeur: ALATTAR, Mouhannad, 92326 Chatillon Cedex (FR); ACHEMLAL, Mohammed, 14000 Caen (FR)
(86) Numéro de dépôt international: PCT/FR2015/053582
(87) Numéro de publication internationale: WO 2016/102830

(56) Documents cités:
- US-A1- 2014 074 637
- Cortex Mcp: "A Solution to the Mobile Wallet Conundrum Introduction", , 16 mars 2014 (2014-03-16), XP055227702, Extrait de l'Internet: URL:http://www.cortexmcp.com/blog/wp-conte nt/uploads/2014/03/Solution_To__Mobile_Wal let_Conundrum_Whitepaper_032014.pdf [extrait le 2015-11-11]
- Clarksville Rd: "Smart Card Alliance A SMART CARD ALLIANC E MOBILE & NFC COUNCIL WHITE PAPER", , 1 août 2014 (2014-08-01), XP055171894, Extrait de l'Internet: URL:http://www.smartcardalliance.org/wp-co ntent/uploads/HCE-101-WP-FINAL-081114-clea n.pdf [extrait le 2015-02-25]
- Consult Hyperion: "HCE and SIM Secure Element: It's not black and white", , 1 juin 2014 (2014-06-01), XP055227381, Extrait de l'Internet: URL:http://www.chyp.com/wp-content/uploads /2015/01/HCE-and-SIM-Secure-Element.pdf [extrait le 2015-11-10]

## Description

La présente invention concerne un procédé de sécurisation de transactions sans contact.

Elle trouve une application particulièrement intéressante dans la sécurisation de services sans contact sensibles, tels que des services de paiement sur terminaux mobiles intelligents (ou « smartphone » en anglais).

On connaît des services sans contact sensibles sur terminaux mobiles. Les terminaux sont habituellement équipés d'un élément de sécurité, agencé pour mémoriser une application sensible, ainsi que des données sensibles de l'utilisateur nécessaires à l'exécution de l'application. Récemment, l'introduction d'un environnement d'émulation de carte (ou « HCE » pour « Host Card Emulation ») dans les terminaux mobiles intelligents a permis la mise en oeuvre de services sans contact indépendamment d'un élément de sécurité. Un tel environnement permet au terminal mobile de se comporter comme une carte à puce. Dans une architecture HCE, les applications sensibles sont installées et s'exécutent au niveau du système d'exploitation du terminal mobile qui constitue l'hôte (ou le « host » en anglais) de ces applications. Une telle solution présente l'avantage de faciliter le déploiement et la mise à jour de services. En effet, les architectures d'exécution et de gestion sont plus simples : elles nécessitent moins de composants techniques et impliquent moins d'acteurs. Cependant, il est connu que les applications sur mobiles et le système d'exploitation dont elles dépendent n'offrent pas le même niveau de sécurité que des applications qui reposent sur un élément de sécurité.

Afin de pallier ces faiblesses et de garantir un certain niveau de sécurité, il a été proposé dans le cadre de services qui nécessitent un fort niveau de sécurité, d'utiliser des données de substitution appelées « jeton » pour minimiser les risques de compromission. Les jetons sont des données d'authentification temporaires ou à usage unique. Ainsi, il n'est plus nécessaire de stocker de façon permanente des données sensibles telles que des numéros de compte personnels (« PAN » pour « Personal Account Number »), des codes « PIN » (pour « Personal Identification Number ») et des clés. Par exemple, dans le cadre d'un service de paiement, au lieu d'utiliser directement un numéro de compte bancaire au cours d'une transaction sans contact avec un lecteur sans contact le terminal fournit au lecteur un numéro de compte jetable (on parle de « tokenised PAN » en anglais) lorsque celui-ci requiert le numéro de compte. Le lecteur transmet ensuite le jeton à une entité de compensation qui s'interface avec un fournisseur de jetons qui a délivré le jeton. Le fournisseur de jetons vérifie que le jeton, présenté pour la compensation, est valide et fournit le numéro de compte associé à l'entité de compensation. L'entité de compensation utilise le numéro de compte pour achever la requête d'autorisation de paiement de la transaction.

Cependant, l'utilisation d'un jeton à la place d'une donnée sensible ne résout pas tous les problèmes de sécurité. Ainsi, un service sensible reste vulnérable à des attaques par relais. Par exemple, un attaquant peut installer un virus de type cheval de Troie sur le terminal de l'utilisateur à l'insu de celui-ci. Le virus peut relayer un jeton valide qui est enregistré sur le terminal de l'utilisateur vers un autre terminal contrôlé par l'attaquant. L'attaquant peut utiliser le jeton dans le cadre de l'exécution d'un service de paiement sur le terminal qu'il contrôle et exécuter une transaction de paiement en utilisant ce jeton. C'est au final le compte bancaire de la victime de l'attaque qui est débité.

Un des buts de l'invention est de remédier à des insuffisances/inconvénients de l'état de la technique et/ou d'y apporter des améliorations.

A cette fin, l'invention propose un procédé de sécurisation d'une transaction d'une application sans contact, ladite application étant mémorisée dans le terminal mobile, ladite transaction étant mise en oeuvre entre le terminal mobile et un lecteur sans contact, ledit terminal comprenant un élément de sécurité, ledit procédé comprenant les étapes suivantes, mises en oeuvre par le terminal mobile :
- envoi par l'application au lecteur d'un jeton représentatif d'une donnée sensible et d'une première valeur d'authentification associé au jeton,
- réception par l'élément de sécurité en provenance du lecteur du jeton et de la première valeur d'authentification associée,
- calcul par l'élément de sécurité d'une deuxième valeur d'authentification à partir du jeton reçu et comparaison de la première et de la deuxième valeur d'authentification, et
- envoi du résultat de la comparaison au lecteur, ledit lecteur mettant fin à la transaction si le résultat est négatif.

Avec le procédé de sécurisation d'une transaction décrit ici, lorsque le lecteur requiert auprès de l'application sans contact un jeton en tant que donnée de substitution d'une donnée sensible, le jeton est vérifié par l'élément de sécurité. Plus précisément, une valeur d'authentification, dépendant de l'élément de sécurité, est associée au jeton afin de vérifier l'intégrité du jeton au moment de son utilisation. Ainsi, le jeton ne peut être utilisé que par le terminal auquel il est destiné. Le relais de ce jeton par un cheval de Troie vers le terminal de l'attaquant sera détecté. En effet, l'élément de sécurité de ce deuxième terminal ne peut pas vérifier l'intégrité du jeton puisque la vérification du message d'authentification associé au jeton n'est pas positive.

Par ailleurs, le procédé décrit ici permet la mise en oeuvre de transactions offline, c'est-à-dire sans que le serveur distant ne soit joignable. En effet, la vérification du jeton faite par l'élément de sécurité garantit au lecteur sans contact que le jeton est valide. Avec la solution proposée, le lecteur vérifie tout de suite si le jeton est corrompu ou utilisé par un terminal différent de celui auquel il était destiné. Ainsi, un jeton corrompu n'est pas transmis au réseau de paiement, contrairement aux solutions existantes.

Selon un exemple de réalisation, le procédé de sécurisation d'une transaction comprend les étapes suivantes :
- envoi à un serveur par l'application d'une requête de jeton,
- réception par l'application en provenance du serveur du jeton d'autorisation et de la première valeur d'authentification,
- demande de validation du jeton à l'élément de sécurité,
- calcul par l'élément de sécurité d'une troisième valeur d'authentification à partir du jeton reçu et comparaison par l'élément de sécurité de la première et de la troisième valeur d'authentification et un envoi du résultat de la comparaison à l'application, le jeton étant valide lorsque le résultat est positif.

Durant cette phase préalable, un ou des jetons sont installés de manière sécurisée sur le terminal mobile. Ces jetons sont destinés à être utilisés par l'application de paiement au cours d'une transaction. La phase préalable garantit que le serveur envoie les jetons au bon terminal mobile et inversement que le terminal mobile reçoit les jetons d'un serveur authentique. Les jetons obtenus du serveur sont vérifiés par des techniques cryptographiques traditionnelles comme par exemple au moyen d'une clé secrète partagée avec le serveur et utilisée par celui-ci pour générer le message d'authentification associé au jeton, ou au moyen d'une clé publique du serveur associée à une clé privée du serveur que ce dernier a utilisé pour générer la valeur d'authentification associée au jeton. Une authentification mutuelle entre l'élément de sécurité et le serveur est réalisée, par exemple au moyen d'une méthode qui s'appuie sur la cryptographie asymétrique. Le jeton transmis du serveur à l'application du terminal est vérifié par l'élément de sécurité, sur requête de l'application et le résultat de cette vérification est transmis d'une part à l'application et d'autre part au serveur. Ainsi, le serveur est assuré d'avoir envoyé le jeton à un terminal authentique et l'application est assurée d'avoir reçu le jeton d'un serveur authentique.

L'invention concerne aussi un terminal mobile destiné à mettre en oeuvre une transaction d'une application sans contact, ledit terminal mémorisant ladite application et comprenant un module de sécurité, ledit terminal comprenant en outre :
- des premiers moyens d'envoi, agencés pour que l'application envoie au lecteur un jeton représentatif d'une donnée sensible et une première valeur d'authentification associée au jeton,
- des moyens de réception, agencés pour recevoir en provenance du lecteur le jeton et la première valeur d'authentification,
- des moyens de calcul et de comparaison, agencés pour que l'élément de sécurité calcule une deuxième valeur d'authentification à partir du jeton reçu et compare la première et la deuxième valeur d'authentification, et
- des deuxièmes moyens d'envoi, agencés pour envoyer un résultat de la comparaison au lecteur, ledit lecteur mettant fin à la transaction si le résultat est négatif.

L'invention porte également sur un système de sécurisation d'une transaction d'une application sans contact, comprenant :
- un terminal mobile tel que décrit précédemment, et
- un lecteur sans contact comprenant :
   - des moyens de réception, agencés pour recevoir de l'application le jeton et la première valeur d'authentification associée au jeton,
   - des moyens d'envoi, agencés pour envoyés au terminal le jeton et la première valeur d'authentification
   - des moyens de réception, agencés pour recevoir en provenance du terminal un résultat de la comparaison de la première valeur d'authentification et d'une deuxième valeur d'authentification, ledit résultat étant calculé par l'élément de sécurité, et
- un serveur, comprenant des moyens de réception, agencés pour recevoir un jeton du lecteur au cours de la transaction.

L'invention concerne aussi un programme d'ordinateur sur un support de données et chargeable dans la mémoire d'un terminal mobile, le programme comprenant des instructions de code pour l'exécution des étapes du procédé de sécurisation d'une transaction d'une application sans contact tel que décrit précédemment, lorsque le programme est exécuté sur ledit terminal.

L'invention concerne aussi un support de données dans lequel est enregistré le programme précédent.

D'autres caractéristiques et avantages de la présente invention seront mieux compris de la description et des dessins annexés parmi lesquels :
- la figure 1 est une représentation schématique d'une architecture adaptée pour mettre en oeuvre les étapes d'un procédé de mise en oeuvre d'une transaction sans contact, selon un premier exemple de réalisation de l'invention ;
- la figure 2 présente les étapes d'un procédé de mise en oeuvre d'une transaction sans contact, selon un premier exemple de réalisation de l'invention ;
- la figure 3 est une représentation schématique fonctionnelle d'un terminal mobile, selon un exemple de réalisation de l'invention.

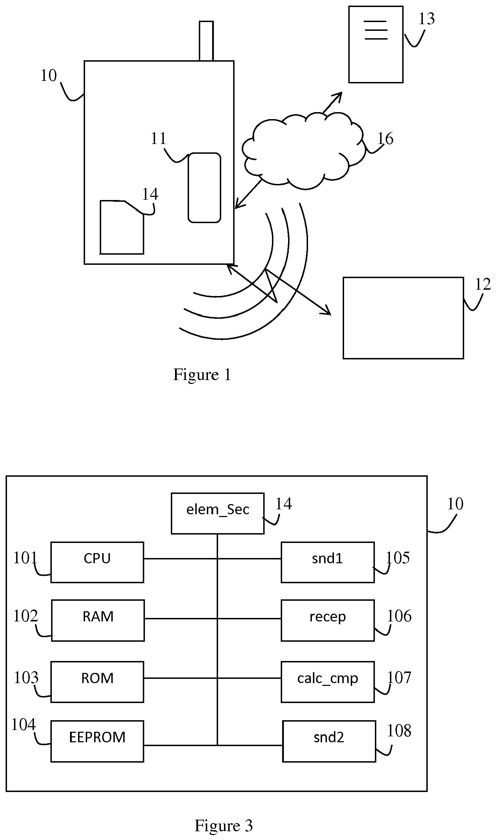

Une architecture adaptée pour mettre en oeuvre les étapes du procédé de mise en oeuvre d'une transaction sans contact, selon un exemple de réalisation de l'invention, va maintenant être décrite en relation avec la figure 1.

Un utilisateur (non représenté sur la figure 1) possède un terminal mobile 10 intelligent (le terme anglais « smartphone » est habituellement utilisé) adapté pour mettre en oeuvre des services sans contact. A cet effet, le terminal mobile 10 mémorise une application sans contact 11, par exemple une application de paiement. L'application de paiement 11, et notamment les fonctions sensibles de l'application, sont mémorisées dans le terminal mobile 10 et sont destinées à être exécutées au-dessus du système d'exploitation du terminal 10 conformément à l'architecture « HCE » (« Host Card Emulation » en anglais). Une telle architecture permet au terminal mobile 10 de se comporter comme une carte à puce. Avec l'architecture HCE, il n'est pas nécessaire de mémoriser l'application HCE 11, ou tout au moins des données sensibles utilisées par l'application dans un module de sécurité. L'application sans contact 11 est agencée pour traiter des commandes reçues du lecteur NFC 12 via un contrôleur NFC.

Le lecteur NFC 12 est situé dans un point de vente (le terme habituellement utilisé est le terme anglais « POS » pour « Point Of Sale »). Il est relié à un serveur marchand apte à mettre en oeuvre les étapes de l'application de paiement qui sont exécutées côté marchand. Pour des raisons de clarté, seul le lecteur 12 est représenté sur la figure. On suppose que les fonctions côté marchand sont mises en oeuvre par le lecteur sans contact 12.

Le terminal mobile 10 comprend également un élément de sécurité 14 de type « UICC » (de l'anglais « Universal Integrated Circuit Card »), ou « eUICC » (pour « embedded », ou embarquée), par exemple une carte « (U)SIM » (de l'anglais « (Universal) Subscriber Identitiy Module ») de type carte SIM. L'élément de sécurité 14 est agencé pour mémoriser des données sensibles telles que des fonctions sensibles, des clés cryptographiques des codes d'authentification, etc.

On suppose que dans un premier exemple de réalisation l'élément de sécurité 14 et un serveur distant 13 partagent la connaissance d'une clé secrète Kₛ. La clé secrète Kₛ a par exemple été préinstallée dans l'élément de sécurité 14 et dans le serveur distant 13 lors d'une phase préalable de configuration exécutée lorsque l'utilisateur s'est abonné au service de paiement. Cette installation s'est faire selon une méthode connue non décrite ici, par exemple au moyen d'une procédure « OTA » (de l'anglais « Over The Air »). La clé secrète Kₛ est propre à l'utilisateur détenteur du terminal mobile 10. Elle est destinée à être utilisée pour vérifier l'authenticité de jetons qui sont fournis du serveur distant 13 aux services HCE du terminal mobile 10, par exemple à l'application 11. Un jeton correspond à un numéro de transaction ou à une valeur de substitution qui est utilisée en remplacement d'une donnée sensible. Par exemple, dans le cadre de l'application de paiement 11, au lieu d'utiliser directement un numéro de compte bancaire au cours d'une transaction sans contact, le terminal 10 fournit au lecteur 12 un jeton en tant que valeur de substitution lorsque celui-ci requiert le numéro de compte. Le lecteur 12 transmet ensuite le jeton à une entité de compensation qui s'interface avec un fournisseur de jetons qui a délivré le jeton (l'entité de compensation et le fournisseur de jetons ne sont pas représentés sur la figure 1). Le fournisseur de jetons vérifie que le jeton est valide et fournit le numéro de compte associé à l'entité de compensation. L'entité de compensation utilise le numéro de compte pour achever la requête d'autorisation de paiement de la transaction.

Dans un deuxième exemple de réalisation, l'élément de sécurité 14 et le serveur 13 possèdent chacun une paire de clés publique/privée. Le serveur 13 possède le couple Kpubₛ/Kprivₛ et l'élément de sécurité 14 possède le couple Kpubₑ/Kprivₑ. Chacune des entités a la connaissance de la clé publique de l'autre, par exemple par l'intermédiaire de certificats X509, ou en accédant à un annuaire de clés publiques. La paire de clés et le certificat associés au serveur distant 13 et à l'élément de sécurité 14 sont générés par le fournisseur de services selon des méthodes connues non décrites ici. La paire de clés du serveur 13 Kpubₛ/Kprivₛ est destinée à être utilisée lors de la génération de jetons pour l'ensemble des terminaux. Plus précisément, la clé privée Kprivₛ du serveur 13 est destinée à être utilisée pour signer des jetons que génère le serveur 13 et pour créer des valeurs d'authentification associées aux jetons et destinées à vérifier leur authenticité. Le couple clé privée/clé publique Kpubₛ/Kprivₛ du serveur 13 est destiné également à authentifier le serveur 13 auprès de l'élément de sécurité 14. Dans une variante de réalisation, la paire de clés utilisée pour l'authentification du serveur 13 auprès de l'élément de sécurité 14 est différente de la paire de clés utilisée pour créer les jetons. La paire de clés Kpubₑ/Kprivₑ de l'élément de sécurité 14 est destinée à être utilisée pour authentifier l'élément de sécurité 14 auprès du serveur 13. Les paires de clés du serveur distant 13 et de l'élément de sécurité 14 ont été préinstallées dans une phase préalable de configuration, par exemple au moyen d'une procédure OTA.

Le module de sécurité 14 est agencé pour s'authentifier auprès du serveur distant 13 et pour authentifier celui-ci avant de télécharger des jetons sur le terminal mobile. Le module de sécurité 14 est agencé pour garantir qu'un jeton provient d'un serveur authentique et qu'il n'a pas été corrompu durant le téléchargement. Enfin, le module de sécurité 14 est agencé pour garantir que l'application HCE 11 a fourni un jeton valide au lecteur sans contact 12 durant une transaction courante.

Le serveur distant 13 est destiné à distribuer des jetons à des services HCE, par exemple à l'application 11, qui les requièrent auprès d'un fournisseur de jetons (ou « TSP » pour « Token Service Provider » en anglais). Dans un premier exemple de réalisation, le serveur distant 13 génère des jetons et joue le rôle du fournisseur de jetons. Dans un autre exemple de réalisation, le serveur distant 13 obtient les jetons d'un fournisseur de jetons qui les génère et les distribue à la demande. Le serveur distant 13 est adapté pour communiquer avec l'application de paiement 11 et avec le module de sécurité 14 à travers le réseau Internet 15.

Les étapes d'un procédé de sécurisation d'une transaction sans contact, selon un exemple de réalisation vont maintenant être décrites en relation avec la figure 2.

Dans un premier exemple de réalisation, on suppose que dans un état initial, une clé secrète Kₛ a été installée dans le module de sécurité 14 du terminal mobile 10 et dans le serveur distant 13. On suppose par ailleurs que chacune de ces entités dispose d'un couple clé publique/clé privée d'authentification, la clé publique étant accessible par l'autre entité, par exemple au moyen de certificats de clés publiques X.509. Les couples de clés sont destinés à être utilisés au cours d'une authentification mutuelle entre l'élément de sécurité 14 et le serveur 13.

Au cours d'une première phase P0 d'obtention de jetons, l'application de paiement 11 requiert et obtient du serveur distant 13 de manière sécurisée un ou plusieurs jetons destinés à être utilisés ultérieurement durant une ou des transactions de paiement.

A cette fin, dans une étape initiale E01 d'envoi d'une requête, l'application de paiement 11 envoie une requête REQ_TOK de jetons au serveur distant 13. La requête est acheminée par exemple via le réseau Internet 15. La requête REQ_TOK comprend par exemple un identifiant de l'application ID_Serv, un identifiant de l'élément de sécurité ID_Sec, une valeur correspondant à un nombre de jetons requis. On suppose ici qu'un seul jeton est requis. L'identifiant de l'élément de sécurité ID_Sec est une valeur qui a été attribuée à l'élément de sécurité 14 lors de l'abonnement de l'utilisateur à un premier service. On suppose que l'identifiant est propre à tous les services d'un même type, par exemple à tous les services de paiement. La requête est reçue par le serveur 13 dans une étape E02 de réception.

Dans une étape suivante E03 d'authentification, il y a authentification mutuelle entre le serveur distant 13 et l'élément de sécurité 14 du terminal mobile 13. Toute méthode d'authentification connue peut être utilisée ici. Par exemple, une méthode basée sur de la cryptographie à clé publique et sur un défi/réponse peut être utilisée. Au terme de cette étape, l'élément de sécurité 14 a l'assurance d'avoir affaire à un serveur 13 authentique et le serveur 13 a l'assurance d'avoir affaire à un élément de sécurité authentique.

Dans une étape suivante E04 de génération, le serveur 13 génère un jeton Token et une première valeur d'authentification Token_tag pour ce jeton. Le jeton Token est par exemple une valeur aléatoire générée par le serveur 13. Dans l'exemple décrit ici, le jeton possède une durée de validité Tval définie par configuration. La durée de validité Tval, optionnelle, est destinée à limiter la durée de validité d'un jeton afin de limiter les risques d'utilisation frauduleuse d'un jeton. Elle est configurable et peut dépendre des services, d'un choix de l'utilisateur, etc. Dans d'autres exemples de réalisation, le jeton peut être limité à une utilisation chez certains marchands, à une utilisation à une date précise, etc.

La première valeur d'authentification Token_tag est générée en appliquant un algorithme de chiffrement paramétré par la clé secrète Kₛ partagée avec l'élément de sécurité 14 au jeton Token, à l'identifiant de service ID_Serv propre à l'application de paiement 11, à la durée de validité Tval et à l'identifiant de l'élément de sécurité ID_Sec. Par exemple, l'algorithme de chiffrement utilisé est « HMAC » (pour « Hashed-Keyed Message Authentication Code » en anglais). En d'autres termes, le serveur génère Token_tag = HMAC_{Ks}(Token, ID_Serv, Tval, ID_Sec). Ainsi, le jeton Token dépend de l'élément de sécurité 14 par sa valeur d'authentification associée.

Dans une étape suivante E05 d'envoi, le serveur 13 envoie à l'application de paiement 11 le jeton Token, la durée de validité Tval, de manière optionnelle l'identifiant de l'élément de sécurité ID_Sec et la première valeur d'authentification Token_tag. Ces informations sont reçues par l'application de paiement 11 dans une étape E06 de réception.

Dans une étape suivante E07 d'envoi, l'application de paiement 11 envoie à l'élément de sécurité 14 le jeton Token, l'identifiant du service ID_Serv, la durée de validité Tval, de manière optionnelle l'identifiant de l'élément de sécurité ID_Sec et le premier message d'authentification Token_tag. Ces informations sont reçues par l'élément de sécurité 14 dans une étape E08 de réception.

Dans une étape E09 de vérification, l'élément de sécurité 14 vérifie le jeton d'authentification Token. A cet effet, il calcule une deuxième valeur d'authentification Token_tag' en appliquant le même algorithme de chiffrement que celui utilisé au cours de l'étape E04. L'algorithme est paramétré par la clé secrète Kₛ qu'il partage avec le serveur distant 13 et appliqué au jeton Token, à l'identifiant du service ID_Serv, à la durée de validité Tval qu'il a reçus au cours de l'étape E08 et à l'identifiant de l'élément de sécurité ID_Sec qu'il connaît. En d'autres termes il calcule Token_tag' = HMAC_{Ks}(Token, ID_Serv, Tval, ID_Sec). Il compare la deuxième valeur d'authentification Token_tag' à la première valeur d'authentification Token_tag. L'élément de sécurité 14 envoie le résultat de la comparaison d'une part au serveur 13 et d'autre part à l'application de paiement 11 au cours d'une étape E010 d'envoi d'un résultat de comparaison. Dans un exemple de réalisation, l'envoi du résultat est sécurisé au moyen d'une signature. Le résultat de la comparaison est reçu par le serveur 13 dans une étape E011 et par l'application 11 dans une étape E012. Lorsque les deux valeurs sont identiques et que le résultat de la comparaison est positif, le serveur distant 13 a la garantie que le jeton Token a été envoyé au bon terminal mobile. Dans un autre cas où le résultat de comparaison est négatif, indiquant un problème lors de l'envoi du jeton, l'application de paiement 11 et le serveur 13 suppriment le jeton Token.

La phase P0 d'obtention d'un jeton peut être mise en oeuvre avant l'exécution d'une transaction de paiement ou indépendamment. Dans ce cas, un ou plusieurs jetons sont disponibles, dans le terminal 10, et utilisables par l'application de paiement 11 pour des transactions de paiement ultérieures.

Dans une phase suivante P1 de transaction, l'utilisateur détenteur du terminal mobile 10 exécute l'application de paiement 11.

Dans une étape initiale E10, l'utilisateur déclenche l'application de paiement 11 et approche son terminal mobile 10 du lecteur sans contact 12. Des échanges ont lieu entre le lecteur sans contact 12 et l'application HCE 11. Par exemple, des messages d'informations tels que le montant de la transaction en cours sont affichés sur l'écran du terminal 10 pour l'utilisateur.

Dans une étape E11 suivante de demande de jeton, le lecteur NFC envoie à l'application de paiement 11 une requête de jeton req_Token. A ce stade, le lecteur sans contact 12 a besoin d'une donnée sensible, par exemple un numéro de compte bancaire. Le jeton est destiné à remplacer la donnée sensible. La requête de jeton req_Token est reçue par l'application 11 dans une étape E12 de réception.

Dans une étape E13 d'envoi de jeton, l'application 11 envoie en réponse au lecteur sans contact 12 le jeton Token,la valeur d'authentification Token_tag associé à ce jeton, la durée de validité Tval, l'identifiant du service ID_Serv et de manière optionnelle l'identifiant ID_Sec de l'élément de sécurité 14. Ces données sont reçues par le lecteur dans une étape E14 de réception.

Dans une étape suivante E15 de demande de vérification, le lecteur 12 envoie au module de sécurité 14 le jeton Token, le message d'authentification Token_tag associé, la durée de validité Tval, l'identifiant du service ID_Serv et l'identifiant ID_Sec de l'élément de sécurité 14 reçus au cours de l'étape E14. Le lecteur sans contact 12 et le module de sécurité 14 communiquent en mode sans contact par l'intermédiaire de l'application 11. Ainsi, le lecteur envoie les données qu'il a reçues à l'application 11 qui les relaie à l'élément de sécurité 14. Le lien de communication sans contact est considéré comme sûr du fait de la courte distance qui sépare le lecteur 12 du terminal mobile 10 au moment de la transaction. Ces données sont reçues par l'élément de sécurité 14 dans une étape E16.

Dans une étape suivante E17 de contrôle, l'élément de sécurité 14 génère une troisième valeur d'authentification Token_tag" pour le jeton Token. L'élément de sécurité 14 applique le même algorithme de chiffrement qu'en phase P0 d'obtention de jetons, paramétré par la clé secrète Kₛ qu'il partage avec le serveur distant 13 au jeton Token, à l'identifiant du service ID_Serv, à la durée de validité Tval , qu'il a reçus au cours de l'étape E16 et à l'identifiant ID_Sec de l'élément de sécurité 14. En d'autres termes il calcule Token_tag" = HMAC_{Ks}(Token, ID_Serv, Tval, ID_Sec). Il compare ensuite la troisième valeur d'authentification calculée Token_tag" à celle qu'il a reçue au cours de l'étape E16. Dans un exemple de réalisation, l'élément de sécurité vérifie si la durée de validité Tval du jeton a expiré. L'élément de sécurité 14 envoie le résultat de la comparaison au lecteur sans contact 12 dans une étape E18. Dans un exemple de réalisation l'envoi est sécurisé au moyen d'une signature. Le résultat de la comparaison est reçu par le lecteur 12 dans une étape E19.

Dans une étape E20 de vérification, le lecteur NFC 12 vérifie le résultat de la comparaison et met fin à la transaction en cours dans un cas où le résultat de la comparaison est négatif (branche « nok » sur la figure 2). Dans un autre cas (branche « ok » sur la figure 2), le lecteur envoie, dans une étape E21 d'envoi de jeton, le jeton au serveur 12 pour compléter la demande d'autorisation et terminer la transaction en cours. Le jeton est reçu par le serveur dans une étape E22 de réception. La transaction est finalisée dans une étape suivante E23.

Dans un deuxième exemple de réalisation, illustré par la figure 2b la génération des jetons et leur vérification reposent sur de la cryptographie à clé publique. Ainsi, l'élément de sécurité 14 et le serveur 13 possèdent chacun une paire de clés publique/privée. Le serveur 13 possède le couple Kpubₛ/Kprivₛ et l'élément de sécurité possède le couple Kpubₑ/Kprivₑ.

Dans cet exemple, la première valeur d'authentification du jeton calculée par le serveur 13 au cours de l'étape E04 de génération est obtenue en appliquant une fonction de hachage à la concaténation du jeton Token, de l'identifiant de service ID_Serv, de la durée de validité Tval et de l'identifiant de l'élément de sécurité ID_Sec et en signant le haché obtenu au moyen de la clé privée Kprivₛ. La fonction de hachage est par exemple « SHA-2 » (pour « Secure Hash Algorithm »). En d'autres termes, le serveur 13 calcule hash(Token, ID_Serv, Tval, ID_Sec) et signe ce hash en le chiffrant avec sa clé privée Kprivₛ.

Dans l'étape E09 de vérification, l'élément de sécurité 14 vérifie de manière classique le jeton d'authentification Token au moyen de la clé publique Kpubₛ du serveur 13. A cette fin, il calcule une deuxième valeur d'authentification en appliquant la même fonction de hachage à la concaténation du jeton, de l'identifiant de service ID_Serv, de la durée de validité Tval et de l'identifiant ID_Sec de l'élément de sécurité 14, et applique un algorithme de vérification de signature paramétré par la clé publique du serveur Kpubₛ à la donnée obtenue et à la signature qu'il a reçue.

L'élément de sécurité contrôle de la même façon le jeton Token au cours de l'étape E17 de contrôle de la phase P1 de transaction.

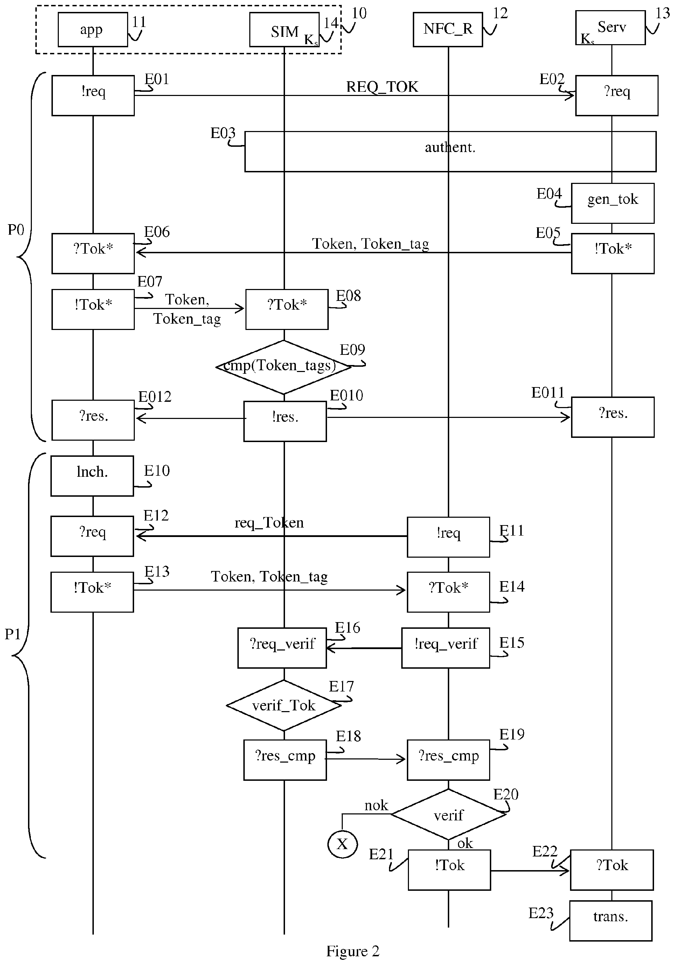

Une description fonctionnelle d'un terminal mobile 10 selon un premier exemple de réalisation de l'invention, va maintenant être fournie en relation avec la figure 3.

Le terminal mobile 10 est un terminal intelligent, ou smartphone en anglais, conforme à une architecture HCE. Conformément à l'architecture HCE, le terminal mobile 10 émule une carte sans contact et héberge au niveau du système d'exploitation des applications sans contact. Le terminal 10 communique directement avec un lecteur sans contact 12 situé à proximité via des interfaces sans contact.

Le terminal mobile 10 comprend :
- une unité de traitement 101, ou « CPU » pour « Central Processing Unit », agencée pour exécuter des instructions de code,
- un ensemble de mémoires, dont une mémoire volatile 102 et une mémoire morte 103 de type « ROM » (de l'anglais « Read Only Memory ») et une mémoire de stockage 104 de type mémoire flash ou « EEPROM » (pour « Electrically-Erasable Programmable Read Only Memory). La mémoire volatile 102 est agencée pour stocker des variables, stocker des résultats temporaires d'exécutions d'instructions, etc. La mémoire de stockage 104 est agencée pour mémoriser des données. En particulier, la mémoire de stockage 104 mémorise des applications sans contact, par exemple l'application de paiement 11 qui comprend des instructions de code pour mettre en oeuvre les étapes du procédé de sécurisation d'une transaction sans contact qui sont exécutées par l'application de paiement 11 ;
- un élément de sécurité 14. Dans un exemple de réalisation, l'élément de sécurité 14 est une carte d'identité d'abonné, ou carte SIM. L'élément de sécurité 14 est agencé pour mémoriser des données sensibles telles que des clés secrètes, des codes d'authentification, etc. Dans un exemple de réalisation, l'élément de sécurité 14 mémorise une clé secrète Kₛ, dont il partage la connaissance avec le serveur distant 13 (non représenté sur la figure 3). Dans un deuxième exemple de réalisation, l'élément de sécurité 14 mémorise au moins une clé privée d'un couple clé privée/clé publique Kprivₑ/Kpubₑ. Dans ce deuxième exemple, il mémorise également une clé publique du serveur distant 13 d'un couple clé privée/clé publique Kprivₛ/Kpubₛ du serveur 13 ;

Le terminal mobile 10 comprend également :
- un premier module 105 d'envoi, agencé pour que l'application 11 envoie au lecteur 12 un jeton Token représentatif d'une donnée sensible et une première valeur d'authentification Token_Tag associée au jeton,
- un module 106 de réception, agencé pour recevoir en provenance du lecteur le jeton et la première valeur d'authentification. Le module 106 de réception est agencé pour mettre en oeuvre l'étape E16 du procédé de sécurisation d'une transaction sans contact tel que décrit précédemment,
- un module 107 de calcul et de comparaison, agencé pour que l'élément de sécurité calcule une deuxième valeur d'authentification à partir du jeton reçu et compare la première et la deuxième valeur d'authentification. Le module 107 de calcul et de comparaison est agencé pour mettre en oeuvre l'étape E17 du procédé décrit précédemment, et
- un deuxième module 108 d'envoi, agencé pour envoyer un résultat de la comparaison au lecteur, ledit lecteur mettant fin à la transaction si le résultat est négatif. Le deuxième module 108 d'envoi est agencé pour mettre en oeuvre l'étape E18 du procédé décrit précédemment.

Le terminal mobile 10 comprend également les modules suivants, non représentés sur la figure 2 :
- un troisième module d'envoi, agencé pour envoyer au serveur une requête de jeton. Le troisième module d'envoi est agencé pour mettre en oeuvre l'étape E01 du procédé décrit précédemment ;
- un deuxième module de réception, agencé pour que l'application reçoive en provenance du serveur le jeton d'autorisation et la première valeur d'authentification. Le deuxième module de réception est agencé pour mettre en oeuvre l'étape E06 du procédé décrit précédemment ;
- un module de demande de validation, agencé pour demander à l'élément la validation du jeton. Le module de demande de validation est agencé pour mettre en oeuvre l'étape E07 du procédé décrit précédemment ;
- un module de calcul et de comparaison, agencé pour que l'élément de sécurité calcule (E09) une troisième valeur d'authentification à partir du jeton reçu et compare la première et la troisième valeur d'authentification et envoie le résultat de la comparaison à l'application, le jeton étant valide lorsque le résultat est positif. Le module de calcul et de comparaison est agencé pour mettre en oeuvre l'étape E07 du procédé décrit précédemment.

Les modules décrit ci-dessus et notamment les premier 105 et deuxième 108 modules d'envoi, le module 106 de réception et 107 de calcul sont de préférence des modules logiciels comprenant des instructions de code logicielles pour faire exécuter celles des étapes du procédé de sécurisation d'une transaction qui sont exécutées par le terminal mobile.

L'invention concerne donc aussi :
- un programme d'ordinateur comportant des instructions pour la mise en oeuvre du procédé de sécurisation d'une transaction sans contact tel que décrit précédemment, lorsque ce programme est exécuté par un processeur ;
- un support d'enregistrement lisible par un lecteur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette ou un disque dur, ou bien un support de transmission tel qu'un signal ou un réseau de télécommunications.

L'invention porte aussi sur un système d'authentification qui comprend :
- un terminal mobile tel que décrit précédemment,
- un lecteur sans contact (12) comprenant :
   - un module de réception, agencé pour recevoir de l'application le jeton et la première valeur d'authentification associée au jeton,
   - un module d'envoi, agencé pour envoyer au terminal le jeton et la première valeur d'authentification
   - un module de réception, agencé pour recevoir en provenance du terminal un résultat de la comparaison de la première valeur d'authentification et d'une deuxième valeur d'authentification, ledit résultat étant calculé par l'élément de sécurité,
- un serveur (13), comprenant :
   - un module de réception, agencé pour recevoir un jeton du lecteur au cours de la transaction.

Les modules du serveur 13, respectivement du lecteur 12 décrits ci-dessus sont de préférence des modules logiciels comprenant des instructions de code logicielles pour faire exécuter celles des étapes du procédé de sécurisation d'une transaction qui sont exécutées par le serveur, respectivement le lecteur.

## Revendications

1. Procédé de sécurisation d'une transaction d'une application sans contact, ladite application (11) étant mémorisée dans le terminal mobile (10), ladite transaction étant mise en oeuvre entre le terminal mobile et un lecteur sans contact (12), ledit terminal comprenant un élément de sécurité (14), ledit procédé comprenant les étapes suivantes, mises en oeuvre par le terminal mobile :
- envoi (E13) par l'application au lecteur d'un jeton représentatif d'une donnée sensible et d'une première valeur d'authentification associé au jeton,
- réception (E16) par l'élément de sécurité en provenance du lecteur du jeton et de la première valeur d'authentification associée,
- calcul (E17) par l'élément de sécurité d'une deuxième valeur d'authentification à partir du jeton reçu et comparaison de la premier et de la deuxième valeur d'authentification, et
- envoi (E18) du résultat de la comparaison au lecteur, ledit lecteur mettant fin à la transaction si le résultat est négatif.

2. Procédé selon la revendication 1, comprenant dans une phase préalable (P0), les étapes suivantes :
- envoi (E01) à un serveur (13) par l'application d'une requête de jeton,
- réception (E06) par l'application en provenance du serveur du jeton d'autorisation et de la première valeur d'authentification,
- demande (E07) de validation du jeton à l'élément de sécurité,
- calcul (E09) par l'élément de sécurité d'une troisième valeur d'authentification à partir du jeton reçu et comparaison par l'élément de sécurité de la première et de la troisième valeur d'authentification et un envoi du résultat de la comparaison à l'application, le jeton étant valide lorsque le résultat est positif.

3. Terminal mobile destiné à mettre en oeuvre une transaction d'une application sans contact (11), ledit terminal mémorisant ladite application et comprenant un module de sécurité (14), ledit terminal comprenant en outre :
- des premiers moyens d'envoi (105), agencés pour que l'application envoie au lecteur un jeton représentatif d'une donnée sensible et une première valeur d'authentification associée au jeton,
- des moyens de réception (106), agencés pour recevoir en provenance du lecteur le jeton et la première valeur d'authentification,
- des moyens de calcul et de comparaison (107), agencés pour que l'élément de sécurité calcule une deuxième valeur d'authentification à partir du jeton reçu et compare la première et la deuxième valeur d'authentification, et
- des deuxièmes moyens d'envoi (108), agencés pour envoyer un résultat de la comparaison au lecteur, ledit lecteur mettant fin à la transaction si le résultat est négatif.

4. Système de sécurisation d'une transaction d'une application sans contact, comprenant :
- un terminal mobile selon la revendication 3, et
- un lecteur sans contact (12) comprenant :
- des moyens de réception, agencés pour recevoir de l'application le jeton et la première valeur d'authentification associée au jeton,
- des moyens d'envoi, agencés pour envoyés au terminal le jeton et la première valeur d'authentification
- des moyens de réception, agencés pour recevoir en provenance du terminal un résultat de la comparaison de la première valeur d'authentification et d'une deuxième valeur d'authentification, ledit résultat étant calculé par l'élément de sécurité,
- un serveur (13), comprenant :
- des moyens de réception, agencés pour recevoir un jeton du lecteur au cours de la transaction.

5. Programme d'ordinateur sur un support de données et chargeable dans la mémoire d'un terminal mobile, le programme comprenant des instructions de code pour l'exécution des étapes du procédé selon l'une des revendications 1 à 2, lorsque le programme est exécuté sur ledit terminal mobile.

6. Support de données lisible par ordinateur sur lequel est enregistré le programme selon la revendication 5.

## Patentansprüche

1. Verfahren zur Absicherung einer Transaktion einer kontaktlosen Anwendung, wobei die Anwendung (11) in dem mobilen Endgerät (10) gespeichert ist, wobei die Transaktion zwischen dem mobilen Endgerät und einem kontaktlosen Lesegerät (12) durchgeführt wird, wobei das Endgerät ein Sicherheitselement (14) umfasst, wobei das Verfahren die folgenden Schritte umfasst, die von dem mobilen Endgerät durchgeführt werden:
- Senden (E13), durch die Anwendung an das Lesegerät, eines Tokens, der für ein sensibles Datenelement repräsentativ ist, und eines ersten Authentifizierungswertes, der dem Token zugeordnet ist,
- Empfang (E16), durch das Sicherheitselement von dem Lesegerät, des Tokens und des zugeordneten ersten Authentifizierungswertes,
- Berechnung (E17), durch das Sicherheitselement, eines zweiten Authentifizierungswertes aus dem empfangenen Token und Vergleich des ersten und des zweiten Authentifizierungswertes, und
- Senden (E18) des Ergebnisses des Vergleichs an das Lesegerät, wobei das Lesegerät die Transaktion beendet, falls das Ergebnis negativ ist.

2. Verfahren nach Anspruch 1, welches in einer vorausgehenden Phase (P0) die folgenden Schritte umfasst:
- Senden (E01), durch die Anwendung an einen Server (13), einer Tokenanforderung,
- Empfang (E06), durch die Anwendung von dem Server, des Autorisierungs-Tokens und des ersten Authentifizierungswertes,
- Anforderung (E07) einer Validierung des Tokens bei dem Sicherheitselement,
- Berechnung (E09), durch das Sicherheitselement, eines dritten Authentifizierungswertes aus dem empfangenen Token und Vergleich, durch das Sicherheitselement, des ersten und des dritten Authentifizierungswertes und Senden des Ergebnisses des Vergleichs an die Anwendung, wobei der Token gültig ist, wenn das Ergebnis positiv ist.

3. Mobiles Endgerät, welches dazu bestimmt ist, eine Transaktion einer kontaktlosen Anwendung (11) durchzuführen, wobei das Endgerät die Anwendung speichert und ein Sicherheitsmodul (14) umfasst, wobei das Endgerät außerdem umfasst:
- erste Sendemittel (105), die dafür ausgelegt sind, dass die Anwendung an das Lesegerät einen Token, der für ein sensibles Datenelement repräsentativ ist, und einen ersten Authentifizierungswert, der dem Token zugeordnet ist, sendet,
- Empfangsmittel (106), die dafür ausgelegt sind, von dem Lesegerät den Token und den ersten Authentifizierungswert zu empfangen,
- Berechnungs- und Vergleichsmittel (107), die dafür ausgelegt sind, dass das Sicherheitselement einen zweiten Authentifizierungswert aus dem empfangenen Token berechnet und den ersten und den zweiten Authentifizierungswert vergleicht, und
- zweite Sendemittel (108), die dafür ausgelegt sind, ein Ergebnis des Vergleichs an das Lesegerät zu senden, wobei das Lesegerät die Transaktion beendet, falls das Ergebnis negativ ist.

4. System zur Absicherung einer Transaktion einer kontaktlosen Anwendung, welches umfasst:
- ein mobiles Endgerät nach Anspruch 3 und
- ein kontaktloses Lesegerät (12), welches umfasst:
- Empfangsmittel, die dafür ausgelegt sind, von der Anwendung den Token und den ersten Authentifizierungswert, der dem Token zugeordnet ist, zu empfangen,
- Sendemittel, die dafür ausgelegt sind, den Token und den ersten Authentifizierungswert an das Endgerät zu senden,
- Empfangsmittel, die dafür ausgelegt sind, von dem Endgerät ein Ergebnis des Vergleichs des ersten Authentifizierungswertes und eines zweiten Authentifizierungswertes zu empfangen, wobei das Ergebnis von dem Sicherheitselement berechnet wird,
- einen Server (13), welcher umfasst:
- Empfangsmittel, die dafür ausgelegt sind, im Verlaufe der Transaktion einen Token von dem Lesegerät zu empfangen.

5. Computerprogramm auf einem Datenträger, das in den Speicher eines mobilen Endgerätes geladen werden kann, wobei das Programm Codeanweisungen zur Ausführung der Schritte des Verfahrens nach einem der Ansprüche 1 bis 2, wenn das Programm auf dem mobilen Endgerät ausgeführt wird, umfasst.

6. Computerlesbarer Datenträger, auf welchem das Programm nach Anspruch 5 aufgezeichnet ist.

## Claims

1. Method for making a transaction of a contactless application secure, said application (11) being stored in the mobile terminal (10), said transaction being executed between the mobile terminal and a contactless reader (12), said terminal comprising a security element (14), said method comprising the following steps, executed by the mobile terminal:
- the application sends (E13) to the reader a token representing a sensitive piece of data and a first authentication value associated with the token,
- the security element receives (E16) the token and the first associated authentication value from the reader,
- the security element calculates (E17) a second authentication value on the basis of the received token and compares the first and the second authentication values, and
- the result of the comparison is sent (E18) to the reader, said reader terminating the transaction if the result is negative.

2. Method according to Claim 1, comprising, in a preliminary phase (P0), the following steps:
- the application sends (E01) a token request to a server (13),
- the application receives (E06) the authorization token and the first authentication value from the server,
- the security element is requested (E07) to validate the token,
- the security element calculates (E09) a third authentication value on the basis of the received token and compares the first and the third authentication values, and sends the result of the comparison to the application, the token being valid if the result is positive.

3. Mobile terminal intended to execute a transaction of a contactless application (11), said terminal storing said application and comprising a security module (14), said terminal further comprising:
- first sending means (105), arranged so that the application sends to the reader a token representing a sensitive piece of data and a first authentication value associated with the token,
- receiving means (106), arranged to receive the token and the first authentication value from the reader,
- calculation and comparison means (107), arranged so that the security element calculates a second authentication value on the basis of the received token and compares the first and the second authentication values, and
- second sending means (108), arranged to send a result of the comparison to the reader, said reader terminating the transaction if the result is negative.

4. System for making a transaction of a contactless application secure, comprising:
- a mobile terminal according to Claim 3, and
- a contactless reader (12), comprising:
- receiving means, arranged to receive the token and the first authentication value associated with the token from the application,
- sending means, arranged to send the token and the first authentication value to the terminal,
- receiving means, arranged to receive from the terminal a result of the comparison of the first authentication value and a second authentication value, said result being calculated by the security element,
- a server (13), comprising:
- receiving means, arranged to receive a token from the reader during the transaction.

5. Computer program on a data medium, which can be loaded into the memory of a mobile terminal, the program comprising code instructions for executing the steps of the method according to either of Claims 1 or 2, when the program is executed on said mobile terminal.

6. Data medium which can be read by computer on which the program according to Claim 5 is recorded.
